# EUROPEAN PATENT APPLICATION

(11) **EP 3 582 111 A1**
(43) Date of publication of application: **18.12.2019**
(21) Application number: 19174335.0
(22) Date of filing: 14.05.2019
(51) Int. Cl.: G06F 16/00

(54) **METHODS AND DEVICES FOR DISPLAYING ELECTRONIC MAP**

(30) Priority: 13.06.2018 CN 201810608566
(71) Applicant: Baidu Online Network Technology (Beijing) Co., Ltd., Beijing 100085 (CN)
(72) Inventor: WANG, Xin, Beijing, 100085 (CN); LI, Xiang, Beijing, 100085 (CN)
(74) Representative: Lux, Berthold

(57) **Abstract**

The present disclosure relates to a method and a device for displaying an electronic map. The method includes: displaying a first map area of the electronic map, in which one or more first objects are displayed in the first map area; adjusting, in response to a user operation, the first map area to obtain a second map area of the electronic map, in which the second map area has the same part as the first map area; retrieving one or more second objects associated to the second map area; screening the same part of the one or more first objects and the one or more second objects to obtain one or more target objects; and displaying the second map area of the electronic map, and displaying the one or more target objects in the second map area.

## Description

### FIELD

The present disclosure relates to the field of electronic map technologies, and more particularly to a method and a device for displaying an electronic map.

### BACKGROUND

With the development of electronic technologies and the popularization of GPS (Global Position System), people increasingly prefer electronic maps. Based on the electronic maps, various functions may be realized, such as positioning, navigating, and interest point finding, which brings convenience to people's lives.

In the related art, when a map area in the electronic map changes, corresponding information that may be searched in the electronic map also changes. For displaying the changed information, one way is to replace original information with new information, which may cause visual instability for a user due to the sudden change in information. Another way is to display new information and original information both on the electronic map, which may cause more and more information displayed in the map area, resulting in information congestion.

### SUMMARY

A method for displaying an electronic map provided in a first aspect of embodiments of the present disclosure includes: displaying a first map area of the electronic map, in which one or more first objects are displayed in the first map area; adjusting, in response to a user operation, the first map area to obtain a second map area of the electronic map, in which the second map area has the same part as the first map area; retrieving one or more second objects associated to the second map area; screening the same part of the one or more first objects and the one or more second objects to obtain one or more target objects; displaying the second map area of the electronic map, and displaying the one or more target objects in the second map area.

In at least one embodiment, the method further includes: merging one or more objects that are screened out when the same part of the one or more first objects and the one or more second objects are screened and one or more objects that are a part different from the one or more first objects in the one or more second objects, in response to the number of the one or more target objects being less than a number threshold; selecting a target object from the merged objects until the number of the one or more target objects reaches the number threshold.

In at least one embodiment, selecting the target object from the merged objects comprises: selecting the target object according to a weight corresponding to each merged object

In at least one embodiment, the one or more first objects are displayed in a detailed mode or an abbreviated mode in the first map area; screening the same part of the one or more first objects and the one or more second objects to obtain the one or more target objects, includes: using the same part of the one or more first objects and the one or more second objects as data to be screened; retaining the data to be screened as the target object in response to that the data to be screened is displayed in the detailed mode in the first map area; screening the data to be screened based on a corresponding weight to obtain the target object in response to that the data to be screened is displayed in the abbreviated area in the first map area.

In at least one embodiment, displaying the one or more target objects in the second map area includes: displaying continually the one or more target objects in the detailed mode in the second map area in response to that the one or more target objects are displayed in the detailed mode in the first map area.

In at least one embodiment, the one or more first objects and the one or more second objects are obtained by searching using a search term; the weight is configured to indicate a degree of matching with the search term.

In at least one embodiment, displaying the one or more target objects in the second map area includes: based on weights of at least two target objects, determining that one of the at least two target objects is displayed in the detailed mode, and determining a rest of the at least two target objects is displayed in the abbreviated mode, in response to that there is overlap between displaying ranges of the at least two target objects in the second map area.

A device for displaying an electronic map provided in a second aspect of embodiments of the present disclosure includes: a first display module, configured to display a first map area of the electronic map, in which one or more first objects are displayed in the first map area; an adjustment module, configured to adjust, in response to a user operation, the first map area to obtain a second map area of the electronic map, in which the second map area has the same part as the first map area; a retrieving module, configured to retrieve one or more second objects associated to the second map area; a screening module, configured to screen the same part of the one or more first objects and the one or more second objects to obtain one or more target objects; and a second display module, configured to display the second map area of the electronic map, and to display the one or more target objects in the second map area.

In at least one embodiment, the device further includes: a merging module, configured to merge one or more objects that are screened out when the same part of the one or more first objects and the one or more second objects are screened and one or more objects that are a part different from the one or more first objects in the one or more second objects, in response to the number of the one or more target objects being less than a number threshold; a selecting module, configured to select a target object from the merged objects until the number of the one or more target objects reaches the number threshold.

In at least one embodiment, the selecting module is configured to select the target object according to a weight corresponding to each merged object.

In at least one embodiment, the one or more first objects are displayed in a detailed mode or an abbreviated mode in the first map area, the selecting module is configured to use the same part of the one or more first objects and the one or more second objects as data to be screened; retain the data to be screened as the target object in response to that the data to be screened is displayed in the detailed mode in the first map area; and screen the data to be screened based on a corresponding weight to obtain the target object in response to that the data to be screened is displayed in the abbreviated area in the first map area.

In at least one embodiment, the second display module is configured to displaying continually the one or more target objects in the detailed mode in the second map area in response to that the one or more target objects are displayed in the detailed mode in the first map area.

In at least one embodiment, the one or more first objects and the one or more second objects are obtained by searching using a search term; the weight is configured to indicate a degree of matching with the search term.

In at least one embodiment, the second display module is configured to: based on weights of at least two target objects, determine that one of the at least two target objects is displayed in the detailed mode, and determine a rest of the at least two target objects is displayed in the abbreviated mode, in response to that there is overlap between displaying ranges of the at least two target objects in the second map area.

A non-transitory computer-readable storage medium provided in a third aspect of embodiments of the present disclosure has stored thereon computer programs. The programs are executed by a processor to implement the method as the first aspect.

The technical solutions provided in the embodiments of the present disclosure may include the following beneficial effects.

The first map area of the electronic map is displayed, in which the one or more first objects are displayed in the first map area; the first map area is adjusted to obtain the second map area of the electronic map in response to the user operation, in which the second map area has the same part as the first map area; the one or more second objects associated to the second map area are retrieved; the same part of the one or more first objects and the one or more second objects is screened to obtain the one or more target objects; the second map area of the electronic map is displayed and the one or more target objects are displayed in the second map area. It simplifies the operation, such that the objects displayed in the adjusted map area do not change suddenly, avoiding visual instability, and the objects displayed in the adjusted map area will not become more and more, avoiding visual crowding and realizing stability of displaying objects.

### BRIEF DESCRIPTION OF THE DRAWINGS

These and other aspects and advantages of embodiments of the present disclosure will become apparent and more readily appreciated from the following descriptions made with reference to the drawings, in which:
FIG. 1 illustrates a flow chart of a method for displaying an electronic map according to an embodiment of the present disclosure.
FIG. 2 illustrates a flow chart of a method for displaying an electronic map according to an embodiment of the present disclosure.
FIG. 3a illustrates a schematic diagram of displaying a map area according to an embodiment of the present disclosure.
FIG. 3b illustrates a schematic diagram of displaying a map area according to an embodiment of the present disclosure.
FIG. 4 illustrates a block diagram of a device for displaying an electronic map according to an embodiment of the present disclosure.
FIG. 5 illustrates a block diagram of an exemplary computer device suitable for implementing embodiments of the present disclosure.

### DETAILED DESCRIPTION

Description will be made in detail below to embodiments of the present disclosure. Examples of embodiments are illustrated in the accompanying drawings, in which, the same or similar numbers represent the same or similar elements or elements with the same or similar functions. Embodiments described below with reference to the accompanying drawings are exemplary, which are intended to explain the present disclosure and do not be understood a limitation of the present disclosure.

A method for displaying an electronic map, and a device for displaying an electronic map, according to embodiments of the present disclosure, will be described below with reference to the accompanying drawings.

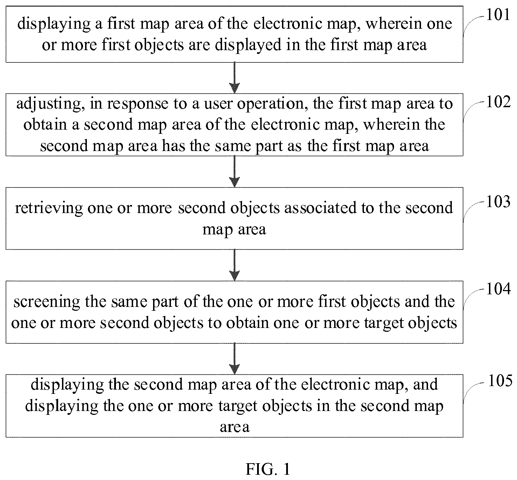

FIG. 1 illustrates a flow chart of a method for displaying an electronic map according to an embodiment of the present disclosure.

As illustrated in FIG. 1, the method includes acts in the following blocks.

At block 101, a first map area of the electronic map is displayed. One or more first objects are displayed in the first map area.

The map area of the electronic map is determined according to a present plotting scale displayed in the electronic map and a size of a screen of a computer device. An area range of the electronic map varies with the map area. Retrieving may be performed in the area range displayed by the map area based on a search term. The retrieved one or more objects may be taken as one or more objects associated to the map area, which may be marked on the corresponding one or more positions in the electronic map. When the search term is a place name, a map area centering on a geographical position corresponding to the place name and ranging based on the corresponding latitudes and longitudes may be displayed. For example, the first map area may be obtained according to the search term "AA", which is an area ranging from xx° east longitude to yy° east longitude, and from cc° north latitude to kk° north latitude. Different map areas may be displayed on the electronic map. In order to distinguish, the map areas that represent different areas in the electronic map are signed as the first map area, the second map area, the third map area, and the like.

It should be noted that the map area of the electronic map may be associated to one or more objects. For the purpose of distinguishing and understanding, the object associated to the first map area is referred to as a first object, and the object associated to the second map area is referred to as a second object, and the like, which is not described in detail.

It should be understood that the first object may be a map element that is obtained from a map information database based on the search word. For example, the first object may be a point of interest, such as a surrounding restaurant, a surrounding shopping mall, a surrounding movie theater, or the like.

In detail, an application corresponding to the electronic map may be installed in the computer device. The computer device may launch the application corresponding to the electronic map. The first map area of the electronic map may be displayed on a screen of the computer device. As a possible implementation manner, the first map area may be obtained according to a present location of the user, in which the present location of the user may be positioned by GPS installed in the computer device, or may be determined according to a base station connected to the computer device. The one or more first objects associated to the first map area may be displayed in the first map area.

At block 102, in response to a user operation, the first map area is adjusted to obtain a second map area of the electronic map.

The second map area has the same part as the first map area. The same part refers to the part where the first map area and the second map area overlap geographically, such that the one or more first objects retrieved in the first map area and the one or more second objects retrieved in the second map area have the same part.

In detail, in response to the user operation, the first map area is adjusted. As another possible implementation manner, based on the displayed first map area, the user moves or zooms the electronic map by manually sliding the screen to generate the user operation. The second map area of the electronic map may be determined according to a moving distance or a zoom ratio.

At block 103, one or more second objects associated to the second map area are retrieved.

In detail, the retrieving may be automatically performed based on the search term in a geographic range corresponding to the second map area to obtain the associated one or more second objects, such that the user does not need to manually input the search term in the second map area, which is convenient for the user.

It should be noted that the search term for retrieving in the second map area is the same as the search term for retrieving in the first map area. As a possible implementation manner, the search term may be manually input by the user when the first map area is displayed. As another possible implementation manner, when the first map area is displayed, the voice is input by the user through a voice collection module, and the voice collection module analyzes the collected voice to obtain the search term input by the user.

At block 104, the same part of the one or more first objects and the one or more second objects are screened to obtain one or more target objects.

In detail, the same part of the one or more first objects and the one or more second objects may be taken as data to be screened. The one or more first objects are displayed in a detailed mode or an abbreviated mode in the first map area. As a possible implementation manner, the data to be screened is retained as the target object in response to that the data to be screened is displayed in the detailed mode in the first map area, and the data to be screened is screened based on a corresponding weight to obtain the target object in response to that the data to be screened is displayed in the abbreviated area in the first map area. As a possible implementation manner, the weight may be determined according to the degree of matching with the search term. The higher the degree of matching, the higher the weight, and the corresponding object may be retained as the target object. When the first map area is adjusted, if an adjustment range is larger, the same part in the second map area and the first map area is less, and the same part in the first map area and the second map area may be screened to obtain the target object, and the first object with the higher weight in the first map area may be retained, such that the target object displayed in the second map area is not completely covered by the data corresponding to the second map area, and the one or more first objects and the one or more first objects may be avoided to be displayed synchronously, avoiding data congestion and improving visual stability of the user.

At block 105, the second map area of the electronic map is displayed, and the one or more target objects in the second map area are displayed.

In detail, if the target object is displayed in the detailed mode in the first map area, the target object is also displayed in the second map area in the detailed mode.

Furthermore, if there is overlap between displaying ranges of at least two target objects in the second map area, based on weights of the at least two target objects, it is determined that one of the at least two target objects is displayed in the detailed mode, and a rest of the at least two target objects is displayed in the abbreviated mode.

With the method for displaying the electronic map according to an embodiment of the present disclosure, the first map area of the electronic map is displayed, in which the one or more first objects are displayed in the first map area; the first map area is adjusted to obtain the second map area of the electronic map in response to the user operation, in which the second map area has the same part as the first map area; the one or more second objects associated to the second map area are retrieved; the same part of the one or more first objects and the one or more second objects is screened to obtain the one or more target objects; the second map area of the electronic map is displayed and the one or more target objects are displayed in the second map area. It simplifies the operation, such that the objects displayed in the adjusted map area do not change suddenly, avoiding visual instability, and the objects displayed in the adjusted map area will not become more and more, avoiding visual crowding and realizing stability of displaying objects.

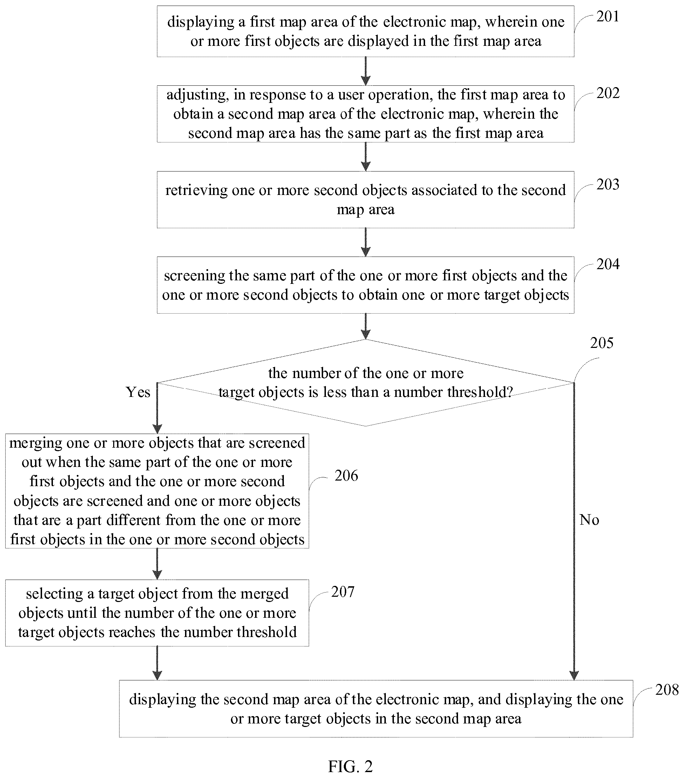

In the previous embodiment, the same part of the one or more first objects and the one or more second objects are screened to obtain the one or more target objects, and the one or more target objects are displayed in the second map area, thereby realizing the stability of displaying data. However, in a practical application, the number of the one or more target objects that may be displayed in the map area is generally set to an upper limit. The number of the one or more target objects may be less than the number threshold, resulting in less reference information for the user. In this case, the data in the one or more first objects and the one or more second objects are further screened. In order to clearly illustrate the screening process, the present embodiment provides another method for displaying an electronic map. FIG. 2 illustrates a flow chart of a method for displaying an electronic map according to an embodiment of the present disclosure.

As illustrated in FIG. 2, based on the previous embodiment, the method may include acts in the following blocks.

At block 201, a first map area of the electronic map is displayed.

In the present embodiment, an explanation will be given based on an example of displaying the electronic map.

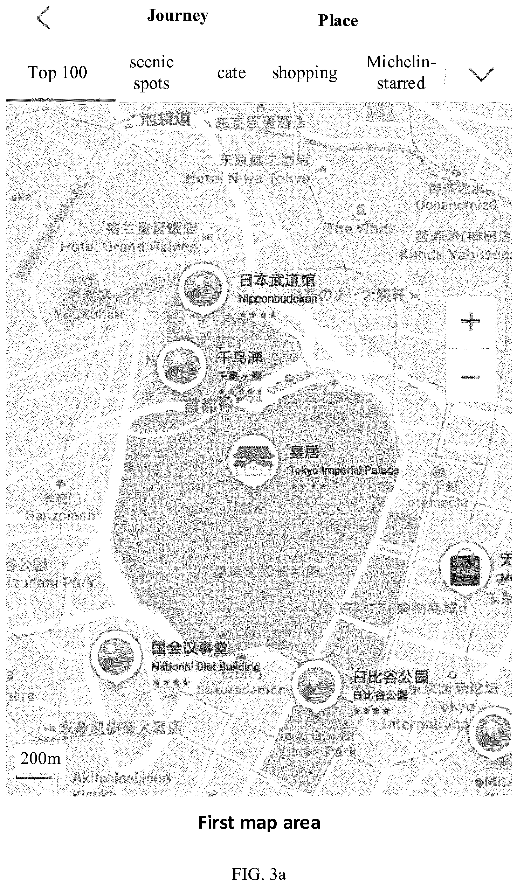

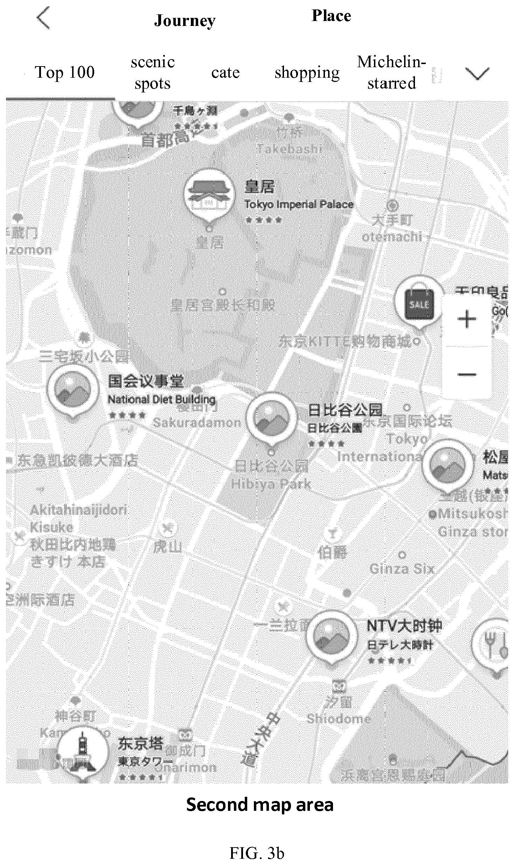

FIG. 3a illustrates a schematic diagram of displaying a map area according to an embodiment of the present disclosure. FIG. 3a illustrates the first map area of the electronic map, which is obtained by retrieving based on a hot spot, and one or more first objects may also be displayed in the first map area, for example, "Nipponbudokan ( 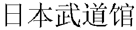 , Chines characters)", "Tokyo Imperial Palace ( 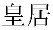 , Chines characters)", "Hibiya Park ( 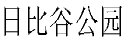 , Chines characters)", "Takebashi ( 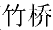 , Chines characters)", "Otemachi ( 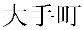 )", etc. The first map area may display more first objects. As a possible implementation manner, a different display mode may be adopted on the first object according to the corresponding weight. the weight is configured to indicate the degree of matching with the search term. The first object with a higher weight may be displayed in the detailed mode in the first map area. The first object with a lower weight may be displayed in the abbreviated mode in the first map area. For example, "Tokyo Imperial Palace", and "Hibiya Park" may be displayed in the detailed mode, such as in teardrop-shaped in the FIG. 3a, and " Takebashi" and " Otemachi" may be displayed in the abbreviated mode, such as in a foveolate shape in the FIG. 3b.

At block 202, in response to a user operation, the first map area is adjusted obtain a second map area of the electronic map.

As a possible implementation manner, in response to the user moving the first map area displayed on the electronic map, the first map area is moved and adjusted to obtain the second map area of the electronic map, and the geographic area corresponding to the second map area is different from the geographic area corresponding to the first map area, and the second map area and the first map area have the same part.

At block 203, the one or more second objects associated to the second map area are retrieved.

In detail, the corresponding hot information in the geographic area may be retrieved, to obtain the one or more second objects associated to the second map area from the map information database.

At block 204, the same part of the one or more first objects and the one or more second objects are screened to obtain one or more target objects.

In detail, the first map area and the second map area have the same part in the geographic range, and thus the one or more first objects associated to the first map area and the one or more second objects associated to the second map area also have the same part, which may be taken as the data to be screened. If the data to be screened is displayed in the detailed mode in the first map area, the data to be screened is reserved as the target object. If the data to be screened is displayed in the abbreviated area in the first map area, the data to be screened is screened based on a corresponding weight. As a possible implementation manner, the weight may be determined according to the degree of matching with the search term. The higher the degree, the higher the weight. The one with the higher weight may be retained as the target object.

At block 205, it is determined whether the number of the one or more target objects is less than a number threshold. If the number of the one or more target objects is not less than the number threshold, the act in block 208 may be performed. If the number of the one or more target objects is less than the number threshold, the act in block 206 may be performed.

In detail, the one or more target objects that may be displayed in the second map area may be limited to the number threshold. It is determined whether the number of the one or more target objects obtained by the screening is less than the number threshold. If the number of the one or more target objects is not less than the number threshold, the act in block 208 is performed. Otherwise, the act in block 206 is performed.

At block 206. one or more objects that are screened out when the same part of the one or more first objects and the one or more second objects are screened and one or more objects that are a part different from the one or more first objects in the one or more second objects are merged.

In detail, if the number of the one or more target objects that are obtained by the screening is less than the number threshold, the one or more target objects need to be continuously added. The one or more objects that are screened out when the same part of the one or more first objects and the one or more second objects are screened, which are also described in the act at block 204 and displayed in the abbreviated mode in the first map area, may be merged with the part different from the one or more first objects in the one or more second objects, and the merged objects may be taken as the objects to be screened.

At block 207, a target object is selected from the merged objects until the number of the one or more target objects reaches the number threshold.

In detail, the merged objects are sorted according to the degrees of matching with the search term, and the weights corresponding to the merged objects are obtained, and the object with the larger weight is selected until the number of the one or more target objects reaches the number threshold, which increases the number of the one or more target objects displayed in the second map area, and provides more reference information for the user.

At block 208, the second map area of the electronic map, is displayed and the one or more target objects are displayed in the second map area.

In detail, FIG. 3b illustrates a schematic diagram of displaying a map area according to an embodiment of the present disclosure. FIG. 3b illustrates the second map area of the electronic map, and the one or more target objects may be displayed in the second map area, such as "Tokyo Imperial Palace", "National Diet Building", "Hibiya Park", "NTV 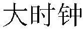 (Chinese characters)", " 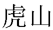 (Chinese characters)", " 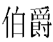 (Chinese characters) ", which realizes the stability of displaying the objects after the adjustment of the map area, under a cast that the total number of objects displayed in the map area is unchanged.

With the method for displaying an electronic map according to an embodiment of the present disclosure, the first map area of the electronic map is displayed, and the first map area is adjusted to obtain the second map area having the same part as the first map area in response to the user operation, and the one or more second objects associated to the second map area may be automatically retrieved, which does not require manual operation of the user, and may be simple and convenient to operate; furthermore the same part of the one or more first objects and the one or more second objects may be screened to retain the object with the higher weight to obtain the one or more target objects, and the number of the one or more target objects is compared with the number threshold of the objects to be displayed in the second map area, and when the number of the one or more target objects is smaller than the number threshold, the one or more objects that are screened out when the same part of the one or more first objects and the one or more second objects are screened may be merged with the one or more objects that are a part different from the one or more first objects in the one or more second objects, and the merged objects may be screened again until the number of the one or more target objects reaches the number threshold, thereby ensuring that the object with the high weight may be retained under the case that the total number of objects to be displayed is unchanged, and realizing the stability of displaying the objects.

In order to implement the above embodiments, the present disclosure also provides a device for displaying an electronic map.

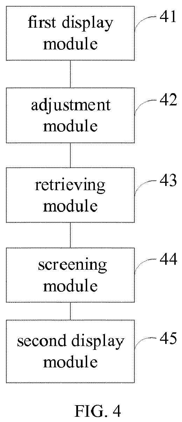

FIG. 4 illustrates a block diagram of a device for displaying an electronic map according to an embodiment of the present disclosure.

As illustrated in FIG. 4, the device includes a first display module 41, an adjustment module 42, a retrieving module 43, a screening module 44, and a second display module 45.

The first display module 41 is configured to display a first map area of the electronic map, in which one or more first objects are displayed in the first map area.

The adjustment module 42 is configured to adjust, in response to a user operation, the first map area to obtain a second map area of the electronic map, in which the second map area has the same part as the first map area.

The retrieving module 43 is configured to retrieve one or more second objects associated to the second map area.

The screening module 44 is configured to screen the same part of the one or more first objects and the one or more second objects to obtain one or more target objects.

The second display module 45 is configured to display the second map area of the electronic map, and to display the one or more target objects in the second map area.

Further, as a possible implementation manner, the device may further include a merging module and a selecting module.

The merging module is configured to merge one or more objects that are screened out when the same part of the one or more first objects and the one or more second objects are screened and one or more objects that are a part different from the one or more first objects in the one or more second objects, in response to the number of the one or more target objects being less than a number threshold.

The selecting module is configured to select a target object from the merged objects until the number of the one or more target objects reaches the number threshold.

As a possible implementation manner, the selecting module is configured to select the target object according to a weight corresponding to each merged object.

As a possible implementation manner, the one or more first objects are displayed in a detailed mode or an abbreviated mode in the first map area, the selecting module is configured to use the same part of the one or more first objects and the one or more second objects as data to be screened; retain the data to be screened as the target object in response to that the data to be screened is displayed in the detailed mode in the first map area; and screen the data to be screened based on a corresponding weight to obtain the target object in response to that the data to be screened is displayed in the abbreviated area in the first map area.

As a possible implementation manner, the second display module 45 is configured to displaying continually the one or more target objects in the detailed mode in the second map area in response to that the one or more target objects are displayed in the detailed mode in the first map area.

As a possible implementation manner, the one or more first objects and the one or more second objects are obtained by searching using a search term. The weight is configured to indicate a degree of matching with the search term.

As a possible implementation manner, the second display module 45 is configured to, based on weights of at least two target objects, determine that one of the at least two target objects is displayed in the detailed mode, and determine a rest of the at least two target objects is displayed in the abbreviated mode, in response to that there is overlap between displaying ranges of the at least two target objects in the second map area.

It should be noted that the foregoing description of the method embodiments is also applicable to the device embodiments, and details are not described herein again.

The division of each module of the device for displaying the electronic map is for illustrative purposes only. In other embodiments, the device may be divided into different modules as needed to complete all or part of the functions of the device.

To achieve the above objectives, a computer device provided in a third aspect of embodiments of the present disclosure includes: a memory, a processor, and computer programs stored on the memory and operable on the processor. When the processor executes the programs, the above method is implemented.

To achieve the above objectives, a non-transitory computer-readable storage medium provided in a fourth aspect of embodiments of the present disclosure has stored thereon computer programs. The programs are executed by a processor to implement the above method.

To achieve the above objectives, a computer program product provided in a fifth aspect of embodiments of the present disclosure is provided. The above method is implemented when an instruction in the computer program product is executed by a processor.

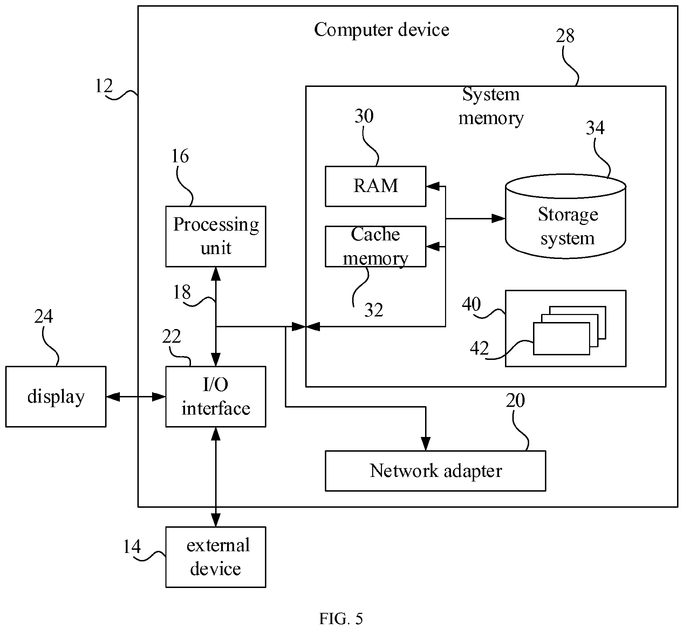

FIG. 5 illustrates a block diagram of an exemplary computer device suitable for implementing an embodiment of the present disclosure. The computer device 12 displayed in FIG. 5 is merely an example, which should be not understood to limit the functions and usage scope of embodiments of the present disclosure.

As illustrated in FIG. 5, the computer device 12 may be represented via a general computer device form. The computer device 12 may include but not be limited to the following components: one or more processors or processing units 16, a system memory 28, and a bus 18 connecting various system components (including the system memory 28 and the processing unit 16).

The bus 18 represents one or more of several types of bus structures, including a memory bus or a memory controller, a peripheral bus, a graphics acceleration port, a processor, or a local bus using any of a variety of bus structures. For example, these architectures include, but are not limited to, an Industry Standard Architecture (hereinafter referred to as ISA) bus, a Micro Channel Architecture (hereinafter referred to as MAC) bus, an enhanced ISA bus, a Video Electronics Standards Association (hereinafter referred to as VESA) local bus and Peripheral Component Interconnection (PCI) bus.

The computer device 12 typically includes a variety of computer system readable media. These media may be any available media accessible by the computer device 12 and includes both volatile and non-volatile media, removable and non-removable media.

The system memory 28 may include a computer system readable medium in the form of volatile memory, such as a random-access memory (hereinafter referred to as RAM) 30 and/or a high-speed cache memory 32. The computer device 12 may further include other removable or non-removable, volatile or non-volatile computer system storage media. By way of example only, the storage device 34 may be configured to read and write a non-removable and non-volatile magnetic media (not illustrated in FIG. 5, commonly referred to as a "hard drive"). Although not shown in FIG. 5, a magnetic disk driver for reading from and writing to a removable and non-volatile magnetic disk (such as "floppy disk") and a disk driver for a removable and non-volatile optical disk (such as compact disk read only memory (hereinafter referred to as CD-ROM), Digital Video Disc Read Only Memory (hereinafter referred to as DVD-ROM) or other optical media) may be provided. In these cases, each driver may be connected to the bus 18 via one or more data medium interfaces. The memory 28 may include at least one program product. The program product has a set (such as, at least one) of program modules configured to perform the functions of various embodiments of the present disclosure.

A program/utility 40 having a set (at least one) of the program modules 42 may be stored in, for example, the memory 28. The program modules 42 include but are not limited to, an operating system, one or more application programs, other programs modules, and program data. Each of these examples, or some combination thereof, may include an implementation of a network environment. The program modules 6140 generally perform the functions and/or methods in the embodiments described herein.

The computer device 12 may also communicate with one or more external devices 14 (such as, a keyboard, a pointing device, a display 100, etc.). Furthermore, the computer device 12 may also communicate with one or more communication devices enabling a user to interact with the computer device 12 and/or other devices (such as a network card, modem, etc.) enabling the computer device 12 to communicate with one or more computer devices. This communication can be performed via the input/output (I/O) interface 22. Also, the computer device 12 may communicate with one or more networks (such as a local area network (hereafter referred to as LAN), a wide area network (hereafter referred to as WAN) and/or a public network such as an Internet) through a network adapter 20. As illustrated in FIG. 5, the network adapter 20 communicates with other modules of the computer device 12 over the bus 18. It should be understood that, although not shown in FIG. 5, other hardware and/or software modules may be used in connection with the computer device 12. The hardware and/or software includes, but is not limited to, microcode, device drivers, redundant processing units, external disk drive arrays, RAID systems, tap Drive and data backup storage system.

The processing unit 16 is configured to execute various functional applications and data processing by running programs stored in the system memory 28, for example, implementing the method for correcting the input speech based on artificial intelligence as described in the above embodiments.

In the description of the present disclosure, reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the phrases in various places throughout this specification are not necessarily referring to the same embodiment or example of the present disclosure. Furthermore, the particular features, structures, materials, or characteristics may be combined in any suitable manner in one or more embodiments or examples. In addition, without a contradiction, the different embodiments or examples and the features of the different embodiments or examples can be combined by those skilled in the art.

In addition, the description of "first", "second" is only for description purpose, it cannot be understood as indicating or implying its relative importance or implying the number of indicated technology features. Thus, features defined as "first", "second" may explicitly or implicitly include at least one of the features. In the description of the present disclosure, "a plurality of' means at least two, such as two, three, unless specified otherwise.

Any process or method described in a flow chart or described herein in other ways may be understood to include one or more modules, segments or parts of codes of executable instructions for achieving specific logical functions or steps in the process, and the scope of a preferred embodiment of the present disclosure includes other implementations, which should be understood by those skilled in the art.

The logic and/or step described in other manners herein or shown in the flow chart, for example, a particular sequence table of executable instructions for realizing the logical function, may be In detail achieved in any computer-readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer-readable medium" may be any device adaptive for including, storing, communicating, propagating or transferring programs to be used by or in combination with the instruction execution system, device or equipment. More specific examples of the computer-readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer-readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer-readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer-readable storage medium.

The storage medium mentioned above may be read-only memories, magnetic disks or CD, etc. Although explanatory embodiments have been illustrated and described, it would be appreciated by those skilled in the art that the above embodiments are exemplary and cannot be construed to limit the present disclosure, and changes, modifications, alternatives and varieties can be made in the embodiments by those skilled in the art without departing from scope of the present disclosure.

## Claims

1. A method for displaying an electronic map, comprising:
displaying (101; 201) a first map area of the electronic map, wherein one or more first objects are displayed in the first map area;
adjusting (102; 202), in response to a user operation, the first map area to obtain a second map area of the electronic map, wherein the second map area has the same part as the first map area;
retrieving (103; 203) one or more second objects associated to the second map area;
screening (104; 204) the same part of the one or more first objects and the one or more second objects to obtain one or more target objects; and
displaying (105; 208) the second map area of the electronic map, and displaying (105; 208) the one or more target objects in the second map area.

2. The method of claim 1, further comprising:
merging (206) one or more objects that are screened out when the same part of the one or more first objects and the one or more second objects are screened and one or more objects that are a part different from the one or more first objects in the one or more second objects, in response to the number of the one or more target objects being less than a number threshold;
selecting (207) a target object from the merged objects until the number of the one or more target objects reaches the number threshold.

3. The method of claim 2, wherein selecting (207) the target object from the merged objects comprises:
selecting the target object according to a weight corresponding to each merged object.

4. The method of any one of claims 1 to 3, wherein the one or more first objects are displayed in a detailed mode or an abbreviated mode in the first map area; and screening (104; 204) the same part of the one or more first objects and the one or more second objects to obtain the one or more target objects, comprises:
using the same part of the one or more first objects and the one or more second objects as data to be screened;
retaining the data to be screened as the target object in response to that the data to be screened is displayed in the detailed mode in the first map area;
screening the data to be screened based on a corresponding weight to obtain the target object in response to that the data to be screened is displayed in the abbreviated area in the first map area.

5. The method of claim 4, wherein displaying (105; 208) the one or more target objects in the second map area comprises:
displaying continually the one or more target objects in the detailed mode in the second map area in response to that the one or more target objects are displayed in the detailed mode in the first map area.

6. The method of any one of claims 2 to 5, wherein the one or more first objects and the one or more second objects are obtained by searching using a search term;
the weight is configured to indicate a degree of matching with the search term.

7. The method of any one of claims 1 to 6, wherein displaying (405; 208) the one or more target objects in the second map area comprises:
based on weights of at least two target objects, determining that one of the at least two target objects is displayed in the detailed mode, and determining a rest of the at least two target objects is displayed in the abbreviated mode, in response to that there is overlap between displaying ranges of the at least two target objects in the second map area.

8. A device for displaying an electronic map, comprising:
a first display module (41), configured to display a first map area of the electronic map, wherein one or more first objects are displayed in the first map area;
an adjustment module (42), configured to adjust, in response to a user operation, the first map area to obtain a second map area of the electronic map, wherein the second map area has the same part as the first map area;
a retrieving module (43), configured to retrieve one or more second objects associated to the second map area;
a screening module (44), configured to screen the same part of the one or more first objects and the one or more second objects to obtain one or more target objects; and
a second display module (45), configured to display the second map area of the electronic map, and to display the one or more target objects in the second map area.

9. The device of claim 8, further comprising:
a merging module, configured to merge one or more objects that are screened out when the same part of the one or more first objects and the one or more second objects are screened and one or more objects that are a part different from the one or more first objects in the one or more second objects, in response to the number of the one or more target objects being less than a number threshold;
a selecting module, configured to select a target object from the merged objects until the number of the one or more target objects reaches the number threshold.

10. The device of claim 9, wherein the selecting module is configured to select the target object according to a weight corresponding to each merged object.

11. The device of any one of claims 8 to 10, wherein the one or more first objects are displayed in a detailed mode or an abbreviated mode in the first map area, the selecting module (44) is configured to use the same part of the one or more first objects and the one or more second objects as data to be screened; retain the data to be screened as the target object in response to that the data to be screened is displayed in the detailed mode in the first map area; and screen the data to be screened based on a corresponding weight to obtain the target object in response to that the data to be screened is displayed in the abbreviated area in the first map area.

12. The device of claim 11, wherein the second display module (45) is configured to displaying continually the one or more target objects in the detailed mode in the second map area in response to that the one or more target objects are displayed in the detailed mode in the first map area.

13. The device of claims 9 to 12, wherein the one or more first objects and the one or more second objects are obtained by searching using a search term;
the weight is configured to indicate a degree of matching with the search term.

14. The device of claims 8 to 13, wherein the second display module (45) is configured to: based on weights of at least two target objects, determine that one of the at least two target objects is displayed in the detailed mode, and determine a rest of the at least two target objects is displayed in the abbreviated mode, in response to that there is overlap between displaying ranges of the at least two target objects in the second map area.

15. A computer-readable storage medium having stored thereon computer programs, wherein the programs are executed by a processor to implement the method of any one of claims 1 to 7.
